# EUROPÄISCHE PATENTANMELDUNG

(11) **EP 1 995 489 A2**
(43) Veröffentlichungstag der Anmeldung: **26.11.2008**
(21) Anmeldenummer: 08152039.7
(22) Anmeldetag: 28.02.2008
(51) Int. Cl.: F16F 9/04, F16F 9/05

(54) **Luftfeder- und Dämpfereinheit mit verstellbarer Vorsteuerung des Hauptventils**

(30) Priorität: 16.05.2007 DE 102007023126
(71) Anmelder: Continental Aktiengesellschaft, 30165 Hannover (DE)
(72) Erfinder: Schallmeier, Christian, 31535 Neustadt (DE)
(74) Vertreter: Finger, Karsten

(57) **Zusammenfassung**

Luftfeder- und Dämpfereinheit für Fahrzeuge, welche mindestens zwei mit Druckluft gefüllte und über Ventile/Ventilschaltungen verbundene Arbeitsräume aufweist, wobei drei Strömungswege zur Verbindung der Arbeitsräume parallel geschaltet sind, von denen einer ein vorgesteuertes und druckabhängig öffnendes Ventil aufweist, welches abhängig von dem durch ein in einem zweiten Strömungsweg befindlichen druckunabhängig steuerbaren Ventil erzeugten Steuerdruck geöffnet wird.

## Beschreibung

Die Erfindung betrifft eine Luftfeder- und Dämpfereinheit für Fahrzeuge, wobei die Luftfeder- und Dämpfereinheit mindestens zwei mit Druckluft gefüllte Arbeitsräume aufweist, die jeweils mindestens teilweise durch Rollbälge begrenzt werden und die Rollbälge unter Bildung einer Rollfalte mindestens teilweise auf Abrollkonturen vorgegebener und als Zylinderflächen ausgebildeter Gehäuseteile abrollen, wobei die Arbeitsräume untereinander über Ventile bzw. Ventilschaltungen verbunden sind.

Solche Luftfeder- und Dämpfereinheit in Kraftfahrzeugen sind bekannt. Luftfeder- und Dämpfereinheiten dienen z. B. in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Dies geschieht in der Regel durch Ventilen/Drosselventile im Strömungsweg zwischen den einzelnen Arbeitsräumen, wodurch die Dämpfung beeinflusst bzw. verändert wird, die durch die dissipative Strömungen zwischen den einzelnen Arbeitsräumen entsteht.

Diese Ventile können dabei sowohl als verstellbare und angetriebene Ventile bzw. Drosselventile ausgebildet sein, als auch als lediglich federbeaufschlagte Überdruck- oder Blow-Off Ventile, die bei einem bestimmten Druck öffnen. Die Ventile bestehen üblicherweise aus mindestens dem Ventilkolben oder -körper, aus der Ventilfeder und aus einem Ventilgehäuse und weisen gegebenenfalls einem zusätzlichen Antrieb auf, wobei dann die Verstellung in aller Regel elektrisch, also z.B. über Magnete, erfolgt. Einfache Drosselventile können in bekannter Weise aus lediglich verengten Querschnitten, Spalten, Überströmkanten etc. bestehen, wobei natürlich auch aus Ventilkolben, Ventilfeder und Ventilgehäuse bestehende Ventile eine entsprechende Drosselwirkung aufweisen.

Die Auslegung und Steuerung der Charakteristika der Federung und Dämpfung eines solchen Systems ist jedoch ziemlich aufwendig und wird im Allgemeinen durch das Zusammenschalten einer Anzahl von mehr oder weniger unterschiedlich wirkenden Ventilen erreicht, mit denen die dissipativen Strömungen beeinflusst werden können, d.h. mit denen während des Betriebes unterschiedliche Dämpfkraftkennlinien eingestellt werden können.

Die DE 101 15 980 offenbart eine Gasfeder-Dämpfer-Einheit mit einem in einem Zylindergehäuse verschiebbaren und gegenüber letzterem abgedichteten Kolben, der zwei Arbeitsräume unterteilt. Der Dämpferraum ist teilweise von einem Rollbalg nach außen begrenzt. Die im Kolben befindlichen Drosselventile sind dabei so gestaltet, dass abhängig von der Durchströmungsrichtung ein unterschiedlicher Strömungswiderstand vorhanden ist und der Ort des Umschlags von laminarer in turbulente Strömung angepasst wird. Bei den hier gezeigten Drosselventilen handelt es sich um fest eingestellte / eingeformte Drosseln ohne Regelungsfunktion.

In der DE 199 32 717 A1 wird eine Einrichtung offenbart, bei der zwei Arbeitsräume einer Gasfeder-Dämpfer-Einheit mit einem in einem Zylindergehäuse verschiebbaren abgedichteten Kolben unterteilt werden. Der Dämpferraum ist teilweise von einem Rollbalg nach außen begrenzt. Die im Kolben befindlichen Drosselventile sind dabei als mit Federscheiben belastete Ventile gestaltet, wobei die Federscheiben und Ventilquerschnitte abhängig von der Durchströmungsrichtung ausgebildet sind.

Aus der DE 43 34 007 A1 ist eine pneumatische Feder-Dämpfer-Einheit mit elektromagnetisch steuerbaren Überströmventilen bekannt, deren Verschlussorgane durch Ventilfederplättchen gebildet werden. Durch die Ventilfederplättchen verläuft der magnetische Fluss und die Ventilfederplättchen wirken in ihrer Schließlage mit zugeordneten Anlageflächen zusammen. Die Schließkraft ist durch einen steuerbaren Elektromagneten veränderbar, so dass eine Feder-Dämpfer-Einheit mit veränderlicher Abstimmung vorliegt. Mit dieser Feder-Dämpfer-Einheit ist es möglich, die maximale Schließkraft oder Vorspannung einzustellen und zu bestimmen, ab welchem Druck das Ventil öffnet.

Aus der DE 101 35 261 Cl ist eine Gasfeder-Dämpfer-Einheit mit Überströmdrosseln bekannt, die mit federnden Dichtscheiben verschlossen sind. Die federnden Dichtscheiben sind nicht fest eingespannt, sondern durch eine Federkraft nur für einen vorbestimmten Druckdifferenzbereich festgelegt. Nach Überschreiten eines bestimmten Druckes hebt der Einspannbereich ab, wobei die federnde Kraft zur Belastung der Dichtscheibe vorzugsweise durch eine ebenfalls federnde Ringscheibe aufgebracht wird.

Diesen bisherigen Ausführungsformen haftet jedoch der Nachteil an, dass eine Verstellmöglichkeit für die Dämpferkennung abhängig von der jeweiligen Fahrsituation im Sinne einer Umschaltung der Luftdämpfer auf eine andere Dämpfungs-Kennlinie entweder nur in geringem Umfang vorhanden oder überhaupt nicht gegeben ist. Der dynamische Differenzdruck an den Drosselventilen und der Volumenstrom sind maßgeblich für den Energieumsatz durch Dissipation und damit für die Dämpfungsarbeit. Bei der Luftdämpfung sind hohe Drücke und große Volumenströme zur Erzeugung der erforderlichen Dämpfungsarbeit nötig. Eine Beeinflussung der Dämpferkennung, d.h. der Dämpfungs-Kennlinie ist also insbesondere deswegen schwierig, weil bei den hier vorliegenden Gasdämpfungssystemen hohe Drücke und hohe Volumenströme zu schalten sind.

Die DE 10 2005 005 153 A1 offenbart hierzu eine pneumatische Federungs- und Dämpfungseinrichtung für Fahrzeuge, bei der die Verbindung zwischen den Arbeitsräumen eine aus mehreren Ventilen bestehende "Verstellventileinrichtung" aufweist, bei der ein Drosselorgan und ein eine Druckdifferenz an diesem Drosselorgan abgreifendes Druckregelventil vorgesehen ist. Das Drosselorgan ist dabei mit einem weiteren und ansteuerbaren Drosselverstellventil in Reihe geschaltet. Der Hauptvolumenstrom wird dabei vom Druckregelventil gesteuert und ist dem Strömungszweig parallel geschaltet, in dem sich Drosselorgan und ansteuerbares Drosselverstellventil befinden. Die Vorspannung des Druckregelventils steht im Gleichgewicht mit dem Druckabfall über dem Drosselorgan, so dass das Druckregelventils bei zunehmender Durchflussmenge durch das Drosselorgan weiter öffnet und somit die Durchflussmenge durch das Drosselverstellventil im Wesentlichen konstant bleibt. Hierbei wird der Hauptvolumenstrom von einem Druckregelventil gesteuert, welches selbst nicht druckabhängig, sondern lediglich durch die Änderung des Querschnitts einer verstellbaren Drossel (Drosselverstellventil) beeinflusst ist. Damit beeinflusst man die an sich progressive Dämpfungscharakteristik eines Drosselventils in Richtung auf eine Linearisierung des Kennlinienverlaufs. Nachteilig ist bei dieser Schaltung, dass bei einem Stromausfall, d.h. bei geschlossenem Drosselverstellventil der Steuerdruck/Druckabfall völlig entfällt und keinerlei Einstellungsmöglichkeiten für eine so genannte "Hartkennung" d.h. im "Fail-Safe-Modus" vorhanden sind.

Für die Erfindung bestand also die Aufgabe, eine Luftfeder- und Dämpfereinheit für Fahrzeuge bereitzustellen, bei der eine gute Verstellbarkeit unabhängig von der Druckdifferenz in den Arbeitsräumen im Sinne einer Steuerung / Regelung der Dämpferkennung erreicht wird, bei der neben großen Volumenströmen zwischen den Arbeitskammern auch große Druckdifferenzen durch steuerbare Ventile geschaltet werden können, wodurch eine Anpassung und Reaktion auf unterschiedliche Untergrund- und Fahrsituationen ermöglicht wird, und bei dem auch bei einem Ausfall der Steuerung, z.B. bei Stromausfall eine Verstellmöglichkeit der dann vorliegenden "Hartkennung" verbleibt.

Gelöst wird die Aufgabe durch die Merkmale des Hauptanspruchs. Vorteilhafte Weiterbildungen sind in den Unteransprüchen offenbart.

Hierbei ist innerhalb der Ventile (17, 18) mindestens jeweils
a) ein erster Strömungsweg zur Verbindung der Arbeitsräume vorgesehen ist, der ein fest eingestelltes Drosselventil (Bypass / Drossel) aufweist, dass
b) ein zweiter Strömungsweg zur Verbindung der Arbeitsräume vorgesehen ist, in dem eine als fest eingestelltes Drosselventil ausgebildete Vorblende und ein unabhängig von der Druckdifferenz zwischen den beiden Arbeitsräumen einstellbares Steuerventil (Drosselverstellventil) in Reihe geschaltet sind, wobei ein druckabhängig öffnendes Ablassventil dem einstellbaren Steuerventil parallel geschaltet ist, und dass
c) ein dritter Strömungsweg zur Verbindung der Arbeitsräume vorgesehen ist, der ein druckabhängig öffnendes vorgesteuertes Ventil, nämlich das Arbeitsventil oder Hauptventil aufweist, welches abhängig von dem durch das Steuerventil erzeugten Steuerdruck zwischen Vorblende und den parallel geschalteten Ventilen im zweiten Strömungsweg, nämlich Steuerventil und Ablassventil, geöffnet wird,
wobei die Strömungswege zur Verbindung der Arbeitsräume parallel geschaltet sind.

Durch eine solche Ausbildung erfolgt zum einen die Verstellung des Ventils im Hauptströmungsweg, nämlich des druckabhängig öffnenden Arbeitsventils im dritten Strömungsweg, unabhängig von Druckdifferenz zwischen den beiden Arbeitsräumen mit Hilfe eines einstellbaren Steuerventils, d.h. in der Regel mit Hilfe eines Drosselverstellventil. Dadurch, dass ein druckabhängig öffnendes Ablassventil dem einstellbaren Steuerventil parallel geschaltet ist, ist bei einem Ausfall des im allgemeinen elektromagnetisch betätigten Drosselverstellventils eine Sicherheitsschaltung (Fail-Safe-Modus) vorhanden, bei der die Hartkennung nicht allein durch das Hauptventil im dritten Strömungskanal vorgegeben, sondern abhängig von einem durch ein druckabhängig öffnendes Ablassventil erzeugten Steuerdruck zwischen Vorblende und Ablassventil im zweiten Strömungskanal einstellbar ist.

Die besonderen Vorteile dieser Schaltung liegen darin, dass die Anpassung der Dämpfkräfte durch eine Verstellung des möglichen Volumenstroms erfolgt, nämlich dadurch, dass ein großer Ventilquerschnitt (Arbeitsventil bzw. Hauptventil) durch ein kleines Steuerventil/Drosselsteuerventil kontrolliert wird. Dadurch wird eine deutliche Verringerung der zur Verstellung benötigten Energie erreicht.

Ein wesentlicher wirtschaftlicher Vorteil dieser Schaltung besteht übrigens darin, dass ein separates Blow-Off-Ventil / Überdruckventil eingespart werden kann.

Die Verstellung basiert grundsätzlich darauf, dass bei geschlossenem Steuerventil keine Druckdifferenz über der Vorblende abfällt. In diesem Fall ergeben sich keine Druckdifferenz und somit auch keine Öffnungskraft am großen Hauptventilkolben. Die Folge ist eine geringer Volumenstrom durch die gesamte Drossel und somit eine hohe Dämpfkraft. Bei vollständig geöffnetem Steuerventil fällt eine große Druckdifferenz über der Vorblende ab. Am Kolben entsteht eine große Druckdifferenz und somit ein großer Strömungsquerschnitt. Der Dämpfer erzeugt nur noch eine geringe Dämpfkraft.

Wie bereits oben dargestellt, ist das zur Vorsteuerung eingesetzte Ventil ein Steuerschieber, also ein Drosselverstellventil, dessen Position nicht von der Druckdifferenz zwischen den Arbeitsräumen beeinflusst wird. Die Einstellung des Steuerquerschnitts ist somit unabhängig vom aktuellen Betriebszustand.

In Parallelschaltung zu dem einstellbaren Drosselverstellventil, d.h. ebenfalls angeschlossen zwischen dem Zwischendruckraum zwischen Vorblende und zweitem Arbeitsraum, ist ein fest eingestelltes Ablassventil angeordnet, welches federbelastet ab einer einstellbaren Druckdifferenz öffnet. Dadurch wird bei geschlossenem Drosselverstellventil ein Druckausgleich zwischen Vorblende und Gegendruck im zweiten Arbeitsraum ermöglicht. Dieser Druckabfall bewirkt dann eine Öffnung des Hauptventilkolbens.

Ein zusätzlicher Bypass im ersten Strömungskanal regelt einen minimalen Luftaustausch zwischen den Kammern.

Eine vorteilhafte Ausbildung besteht darin, dass das Steuerventil als Magnetventil ausgebildet ist, dessen Steuerquerschnitt durch einen Elektromagneten einstellbar ist.

Damit ist das Steuerventil durch Änderung der Bestromung der Magnete von außen steuerbar. Steigt die Druckdifferenz zwischen den Arbeitsräumen an, wird der Steuerquerschnitt weiter geöffnet und die Dämpfkraft sinkt. Liegt kein elektrischer Strom an (unbestromter Fall) ist die gesamte Verbindung zwischen den beiden Arbeitsräumen bis auf einen konstanten Bypass, das ist das fest eingestellte Drosselventil im ersten Strömungsweg, vollständig geschlossen.

Eine weitere vorteilhafte Ausbildung besteht darin, dass der Öffnungsdruck des Ablassventils ebenfalls einstellbar ist. Damit kann die sich bei geschlossenem Steuerventil einstellende "harte" Kennung eingestellt und angepasst werden, beispielsweise auf das dann erforderliche Federungs- und Dämpfungsverhalten bei einer gegebenen Fahrwerkskonstruktion.

Eine weitere vorteilhafte Ausbildung besteht darin, dass das Ablassventil einen federbeaufschlagten Ventilkörper aufweist, wobei der Öffnungsdruck durch einen auf den Ventilkörper gegen den Federdruck einwirkenden Elektromagneten einstellbar ist. Das Ablassventil ist dabei über eine Feder mit einer Vorspannkraft versehen und so konstruiert, dass durch die Bestromung des Elektromagneten die Vorspannung in mehr oder weniger starker Weise aufgehoben wird, so dass das Ventil bei geringeren Druckdifferenzen offnet. Hierdurch erhält man eine weitere Eingriffsmöglichkeit, um im normalen Betriebszustand, d.h. bei vorhandener Stromversorgung die Dämpfungskennlinien zu beeinflussen.

Es versteht sich von selbst, dass die erfindungsgemäße Gestaltung der Verbindung bzw. der Strömungswegen zwischen den Arbeitsräumen in beiden Strömungsrichtungen, also für die Druckstufe (Einfederung) und für die Zugstufe (Ausfederung) erfolgen kann, wobei die Abstimmungen der Ventile natürlich im Federungs- bzw. Dämpfungsverhalten für die Druckstufe und die Zugstufe unterschiedlich erfolgen.

Anhand eines Ausführungsbeispieles soll die Erfindung näher erläutert werden. Es zeigen
- Fig. 1: eine prinzipielle Darstellung einer Luftfeder- und Dämpfereinheit
- Fig. 2: ein erfindungsgemäße Ventilschaltung einer Luftfeder- und Dämpfereinheit
- Fig. 3: die in der Fig. 2 dargestellte Ventilschaltung mit anderen in der Pneumatik gebräuchlichen Symbolen
- Fig. 4: Dämpfungskennlinien der erfindungsgemäßen Ventilschaltung für die Druckstufe

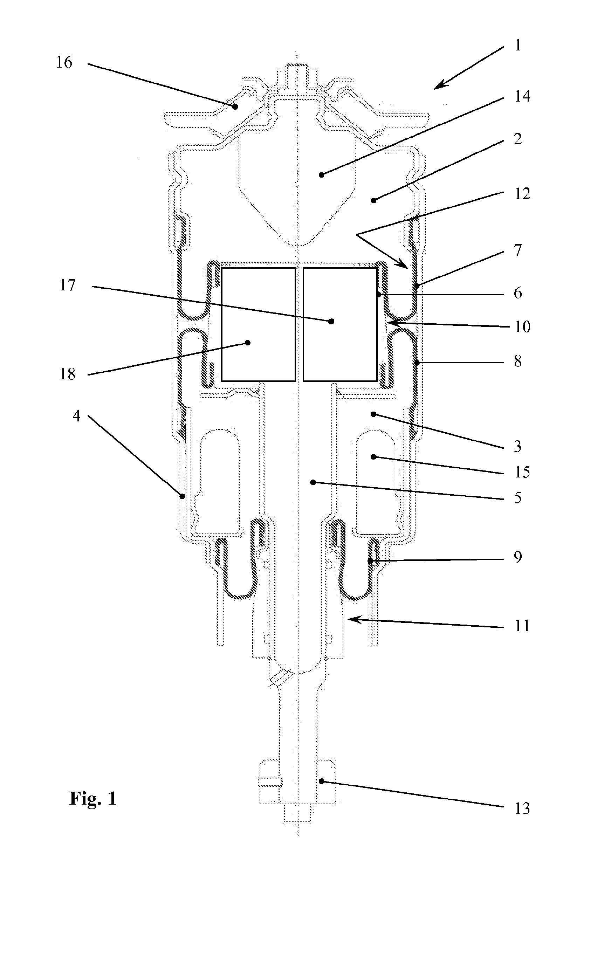

Die Fig. 1 zeigt als prinzipielle Darstellung hierzu eine Luftfeder- und Dämpfereinheit 1 für ein Fahrwerk eines luftgefederten Personenkraftwagens. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrisch ausgebildeten Gehäuse 4 angeordnet und durch einen am Kopfende einer Kolbenstange 5 befindlichen, rotationssymmetrisch ausgebildeten Trennkolben 6 getrennt. Der Kolben 6 ist innerhalb des zylindrischen Gehäuses 4 axial beweglich. Innerhalb des Kolbens 6 sind Ventile/Ventilschaltungen angeordnet, über die die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Zwischen dem Ende des zylindrischen Gehäuses und dem unteren Anschlusspunkt 13 zum Fahrwerk kann ein Faltenbalg zum Schutz gegen Verschmutzungen angeordnet sein.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht.

Karosserieseitig ist die Luftfeder- und Dämpfereinheit über ein Federbein-Kopflager 16 mit dem Fahrzeug in bekannter Weise verbunden.

Innerhalb des Kolbens 6 sind für jede Strömungsrichtung, wie oben bereits erwähnt, die Ventile 17 für die Zugstufe und 18 für die Druckstufe als Verbindungen zwischen den Arbeitsräumen angeordnet.

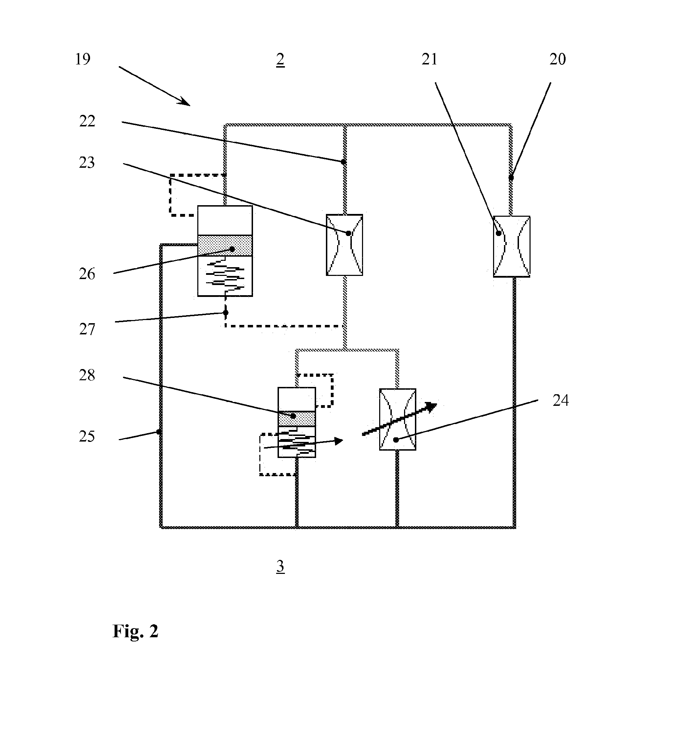

Die Fig. 2 zeigt die Ventilschaltung 19 innerhalb des Ventils 18 für die Druckstufe. Die Ventilschaltung 19 weist einen ersten Strömungsweg 20 zur Verbindung der Arbeitsräume 2 und 3 auf, in dem ein fest eingestelltes Drosselventil 21 als Bypass vorgesehen ist.

Zur Verbindung der Arbeitsräume ist ebenfalls ein zweiter Strömungsweg 22 vorgesehen, in dem eine fest eingestellte und als Drosselventil wirkende Vorblende 23 und ein als Drosselverstellventil ausgebildetes einstellbares Steuerventil 24 in Reihe geschaltet sind. Als Steuerventil 24 ist hier als elektromagnetisch verstellbares Ventil (Magnetventil) vorgesehen, welches unabhängig von der Druckdifferenz zwischen den beiden Arbeitsräumen 2 und 3 geöffnet und geschlossen werden kann.

Im zweiten Strömungsweg 22 ist weiterhin ein druckabhängig öffnendes, aber im Hinblick auf den Öffnungsdruck einstellbares Ablassventil 28 vorgesehen, welches dem einstellbaren Steuerventil 24 parallel geschaltet ist.

Ein weiterer, nämlich ein dritter Strömungsweg 25 zur Verbindung der Arbeitsräume 2 und 3 ist ebenfalls erfindungsgemäß vorgesehen, der ein vorgesteuertes, druckabhängig öffnendes und federbelastetes Ventil 26 als Arbeitsventil oder Hauptventil aufweist, welches abhängig von dem durch das Steuerventil 24 erzeugten Steuerdruck geöffnet wird. Der Steuerdruck liegt zwischen Vorblende 23 und dem Steuerventil 24 und somit auch in der Leitung 27 an und wirkt gegen die Federkraft des Arbeitsventils 26, verringert diese also. Die Strömungswege 20, 22 und 25 zur Verbindung der Arbeitsräume sind, wie ersichtlich, parallel geschaltet.

Dadurch, dass das einstellbar druckabhängig öffnendes Ablassventil 28 dem einstellbaren Steuerventil (Drosselverstellventil) 24 parallel geschaltet ist, ist bei einem Ausfall des elektromagnetisch betätigten Steuerventils 24 eine Sicherheitsschaltung (Fail-Safe-Modus) vorhanden, bei der die Hartkennung nicht allein durch die Charakteristik des Arbeitsventils 26 im dritten Strömungskanal 25 vorgegeben, sondern ebenfalls von dem dann- bei geschlossenem Steuerventil 24- durch das druckabhängig öffnende Ablassventil 28 erzeugten Steuerdruck zwischen Vorblende 23 und Ablassventil 28 im zweiten Strömungskanal 22 einstellbar ist

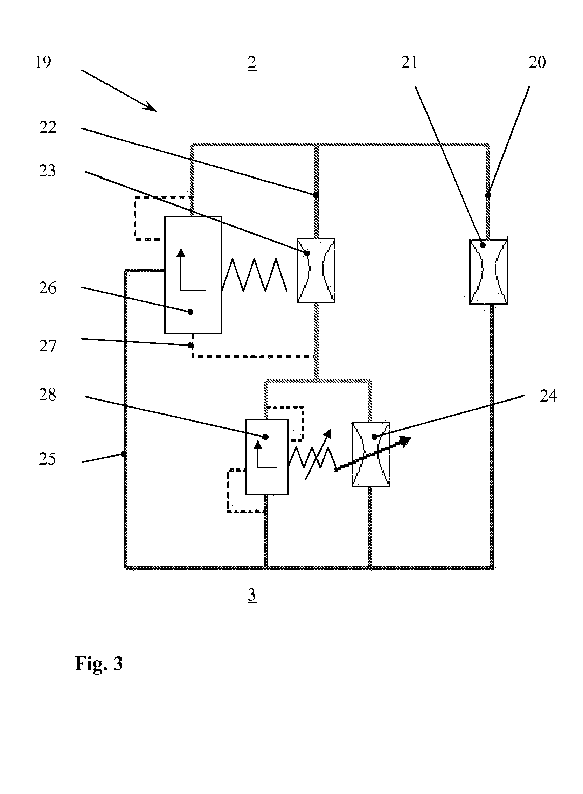

Fig. 3 zeigt hierzu noch mal die in der Fig. 2 dargestellte Ventilschaltung 19, jedoch mit anderen, in der Pneumatik gebräuchlichen Symbolen für die Ventile 28 und 26.

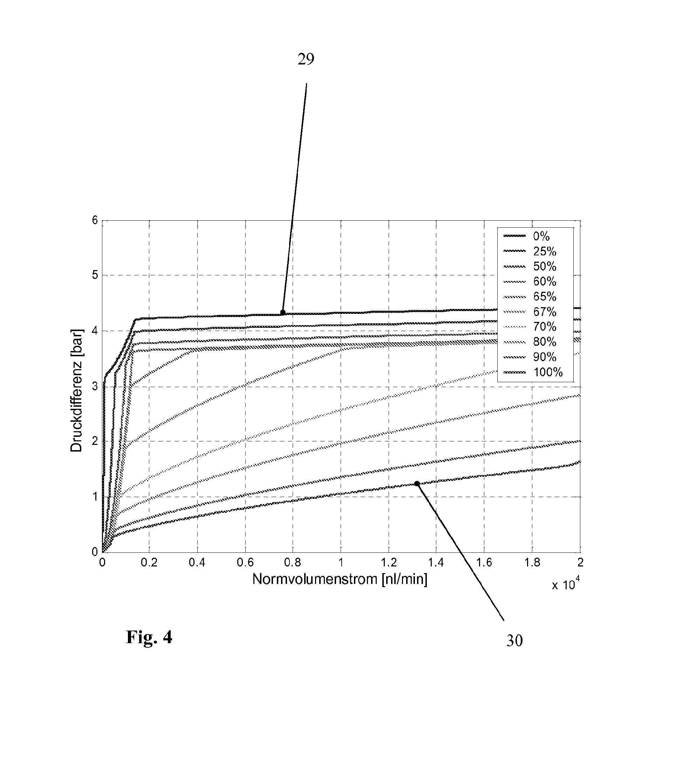

Fig. 4 zeigt die mit der erfindungsgemäßen Ventilschaltung 19 erreichbaren Dämpfungskennlinien für die Druckstufe, also für das Einfedern eines PKW, aufgetragen in Form der Druckdifferenz [bar] über dem Normvolumenstrom [Normliter/min]. Dabei Kennzeichnet die die Dämpfungskennlinie 30 die niedrigste Dämpfung (weiche Kennung) bei vollständiger Öffnung (100% Öffnung) des einstellbaren Steuerventils (Drosselverstellventil) 24 und die Dämpfungskennlinie 29 die größte Dämpfung (härteste Kennung) bei geschlossenem Steuerventil 24 (0 % Öffnung).

Die hier gezeigte Ausführung der Ventilschaltung zeichnet sich durch eine besonders kompakte Bauform aus.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7 - 9: Rollbalg
- 10 - 12: Fläche mit Abrollkontur
- 13: Anschlusspunkt
- 14: Federnder Anschlag
- 15: Federnder Anschlag
- 16: Federbein-Kopflager
- 17: Ventil
- 18: Ventil
- 19: Ventilschaltung
- 20: Erster Strömungsweg
- 21: Drosselventil
- 22: Zweiter Strömungsweg
- 23: Drosselventil
- 24: Einstellbares Steuerventil
- 25: Dritter Strömungsweg
- 26: Arbeitsventil/Hauptventil
- 27: Leitung
- 28: Ablassventil
- 29: Dämpfungskennlinie bei geschlossenem Steuerventil 24
- 30: Dämpfungskennlinie bei vollständig geöffnetem Steuerventil 24

## Patentansprüche

1. Luftfeder- und Dämpfereinheit für Fahrzeuge, wobei die Luftfeder- und Dämpfereinheit mindestens zwei mit Druckluft gefüllte Arbeitsräume (2, 3) aufweist, die jeweils mindestens teilweise durch Rollbälge begrenzt werden und die Rollbälge (7 - 9) unter Bildung einer Rollfalte mindestens teilweise auf Abrollkonturen vorgegebener und als Zylinderflächen ausgebildeter Gehäuseteile abrollen, wobei die Arbeitsräume untereinander über Ventile (17, 18) verbunden sind, **dadurch gekennzeichnet, dass** innerhalb der Ventile (17, 18) mindestens jeweils
a) ein erster Strömungsweg (20) zur Verbindung der Arbeitsräume (2, 3) vorgesehen ist, der ein fest eingestelltes Drosselventil (21) aufweist,
b) ein zweiter Strömungsweg (22) zur Verbindung der Arbeitsräume vorgesehen ist, in dem eine als fest eingestelltes Drosselventil ausgebildete Vorblende (23) und ein unabhängig von der Druckdifferenz zwischen den beiden Arbeitsräumen einstellbares Steuerventil (24) in Reihe geschaltet sind, wobei ein druckabhängig öffnendes Ablassventil (28) dem einstellbaren Steuerventil (24) parallel geschaltet ist, und dass
c) ein dritter Strömungsweg (25) zur Verbindung der Arbeitsräume vorgesehen ist, der ein druckabhängig öffnendes vorgesteuertes Ventil (26) aufweist, welches abhängig von dem durch das Steuerventil (24) erzeugten Steuerdruck zwischen Vorblende (23) und den im zweiten Strömungsweg parallel geschalteten Ventilen, Steuerventil (24) und Ablassventil (28), geöffnet wird,
wobei die Strömungswege (20, 22, 25) zur Verbindung der Arbeitsräume parallel geschaltet sind.

2. Luftfeder- und Dämpfereinheit nach Anspruch 1, **dadurch gekennzeichnet, dass** das Steuerventil (24) als Magnetventil ausgebildet ist, dessen Steuerquerschnitt durch einen Elektromagneten einstellbar ist.

3. Luftfeder- und Dämpfereinheit nach Anspruch 1 oder 2, **dadurch gekennzeichnet, dass** der Öffnungsdruck des Ablassventils (28) einstellbar ist.

4. Luftfeder- und Dämpfereinheit nach Anspruch 3, **dadurch gekennzeichnet, dass** das Ablassventil (28) einen federbeaufschlagten Ventilkörper aufweist, wobei der Öffnungsdruck durch einen auf den Ventilkörper gegen den Federdruck einwirkenden Elektromagneten einstellbar ist.
